# EUROPÄISCHE PATENTANMELDUNG

(11) **EP 1 397 949 A1**
(43) Veröffentlichungstag der Anmeldung: **17.03.2004**
(21) Anmeldenummer: 03102684.2
(22) Anmeldetag: 02.09.2003
(51) Int. Cl.: A01B 15/04, A01B 35/26

(54) **Bodenbearbeitungsschar**

(30) Priorität: 13.09.2002 US 244299
(71) Anmelder: DEERE & COMPANY, Moline, Illinois 61265-8098 (US)
(72) Erfinder: Poutré, Benoit, Elkhart, IA 50073 (US)
(74) Vertreter: Lau-Loskill, Philipp, Dipl.-Phys.

(57) **Zusammenfassung**

Es wird ein Bodenbearbeitungsschar beschrieben, welches einen langgestreckten vorlaufenden Nasenteil (12) aufweist, mit vorderen, gerade ausgebildeten und in einem Winkel von näherungsweise 45 Grad auseinanderlaufenden Schneidkanten (16, 18). Die Oberseite des vorlaufenden Nasenteils (12) ist, von der Seite aus betrachtet, gerade ausgebildet und verläuft aufwärts angewinkelt in einem Winkel von näherungsweise 11 Grad von einer ebenen Bodenfläche zu einer oberen Verbindungsstelle eines Verbindungs- oder Schaftanbauteils (30), welcher mit der Ebene (P) der Bodenfläche einen Winkel von ca. 46 Grad bildet. Das Bodenbearbeitungsschar (10) enthält äußere Flügelbereiche (20, 22) mit vorlaufenden Flügelschneidkanten (26, 28) welche gerade ausgebildet sind und in einem Winkel von näherungsweise 67 Grad auseinanderlaufen und dadurch einen Winkel von ca. 11 Grad mit den entsprechenden vorderen Schneidkanten (16, 18) bilden. Die Gesamtlänge des Bodenbearbeitungsschars (10) ist größer als die Breite.

## Beschreibung

Die Erfindung betrifft ein Bodenbearbeitungsschar, angepasst zur Anbindung an einen Schaft zum Vorwärtsbewegen durch einen Boden, mit einem langgestreckten vorlaufenden Nasenteil, welcher eine vorlaufende Spitze und vordere Schneidkanten enthält, wobei die Schneidkanten gerade ausgebildet sind und ausgehend von der vorlaufenden Spitze in einem Winkel von weniger als 50 Grad auseinanderlaufen. Des Weiteren enthält das Bodenbearbeitungsschar äußere Flügelbereiche, welche sich vom vorlaufenden Nasenteil aus erstrecken und gerade ausgebildete, mit den vorderen Schneidkanten Verbindungsstellen formende, vorlaufende Flügelschneidkanten aufweisen.

Bodenbearbeitungsschare für landwirtschaftliche Arbeitsgeräte, wie z. B. Feldkultivierer und ähnliche Bodenbearbeitungsmaschinen, enthalten üblicherweise nach hinten winklig angeordnete Flügel, welche sich ausgehend von einem vorderen Schar nach außen erstrecken. Ein mittig angeordneter Schaftanbauteil stellt die Verbindung zu einem unteren Ende eines gebogenen Schaftes her. Derartige Schare sind beispielsweise in der US 4 583 599 A und in der US 4 787 462 A offenbart. Der Bodeneintritt, das Durchdringungsvermögen, der Zug, der Verschleiß und die Bodenbearbeitungscharakteristik eines Schars werden durch die Geometrie des Schars bestimmt. Wenn das Schar verschleißt, können sich diese Charakteristiken drastisch verändern und den Arbeitsbetrieb mit dem Schar nachteilig beeinflussen.

Einige derzeitig erhältliche Schare weisen Führungswinkel auf, welche unangemessen sind, um ein Eindringen in harten und/oder festen Boden zuzulassen. Als Folge davon müssten Bedienpersonen die Maschine außerhalb der optimalen Maschinenarbeitseinstellungen betreiben, um ein Eindringen und Verbleiben der Schare in den harten oder festen Boden zu erzwingen. Diese ungeeigneten Einstellungen der Maschine führen zu verschlechterten Kultivierungsvorgängen und zu frühzeitigem Verschleiß des Schars. Des Weiteren kann mangels einer Vertikalkraft, welche das Schar in den Boden treibt, eine ungleichmäßige Bearbeitungstiefe auftreten.

Die Einsatzzeit von Scharen wird oftmals dadurch begrenzt, dass sich die Formgebung aufgrund von Verschleißerscheinungen ändert. Aus diesem Grunde können Schare ausgewechselt werden, bevor sie vollständig abgenutzt sind. Die Arbeitsbreite vieler Schare nimmt mit zunehmenden Verschleiß ab, was zu der Notwendigkeit führt, Schare auszutauschen, bevor diese vollständig abgenutzt sind.

Die der Erfindung zu Grunde liegende Aufgabe wird darin gesehen, ein Bodenbearbeitungsschar der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Bodenbearbeitungsschar der eingangs genannten Art mit vorlaufenden Flügelschneidkanten versehen, welche relativ zueinander in einem Winkel von weniger als 75 Grad auseinanderlaufen.

Ein bevorzugtes erfindungsgemäßes Bodenbearbeitungsschar enthält einen langgezogenen vorlaufenden Nasenteil mit vorderen Schnittkanten, welche gerade ausgebildet sind und ausgehend von einer vorlaufenden Spitze in einem Winkel von näherungsweise 45 Grad auseinanderlaufen. Das Bodenbearbeitungsschar enthält des Weiteren Flügelbereiche mit vorlaufenden Flügelschneidkanten, welche gerade ausgebildet sind und in einem Winkel von näherungsweise 67 Grad auseinanderlaufen. Die äußeren Flügel enthalten des Weiteren sich von vorn nach hinten erstreckende äußere Seitenkanten zur Erhaltung der Breite des Bodenbearbeitungsschars bei Verschleißerscheinungen. Die Oberseite der Führungsnase, von der Seite her betrachtet, ist gerade ausgebildet und verläuft aufwärts angewinkelt in einem Winkel von näherungsweise 11 Grad, ausgehend von der Ebene der Bodenfläche zu einer Verbindungsstelle eines Verbindungs- oder Schaftanbauteils, wobei das Verbindungs- oder Schaftanbauteil einen Winkel von ca. 46 Grad zur Ebene der Bodenfläche bildet. Die vorlaufenden Flügelschneidkanten bilden mit den entsprechenden vorderen Schneidkanten einen Winkel von näherungsweise 11 Grad. Der relativ lange vorlaufende Nasenteil mit spitzem Scharwinkel bietet einen guten Bodeneintritt und gute Durchdringung. Eine Vergrößerung der Scharlänge verlängert die Verschleißzeit und die Formbeibehaltung bei Abnutzung. Im Vergleich zu bisher erhältlichen Kultivierungsscharen mit vergleichbarer Arbeitsbreite wurde die Zugkraft reduziert.

Bei einem erfindungsgemäßen Schar wurden Eigenschaften dahingehend verbessert, dass ein Verschleißmuster geboten wird, durch welches die grundlegende Formgebung des Schars während des Verschleißes besser erhalten bleibt. Des Weiteren weist ein erfindungsgemäßes Schar verbesserte Bodenbearbeitungscharakteristiken auf. Ferner weist ein derartiges Schar eine höhere Lebensdauer als die meisten oder alle anderen bisher erhältlichen Schare auf, während zugleich die Erhaltung einer effektiven Arbeitsbreite, relativ niedriger Zuganforderungen und des Bodendurchdringungsvermögens über einen im Wesentlichen gesamten Verschleißzeitraum geboten wird.

Erfindungsgemäß wird ein verbessertes Bodenbearbeitungsschar für einen Feldkultivierer oder für eine ähnliche landwirtschaftliche Arbeitsmaschine geschaffen, welche im Vergleich zu den meisten bisher erhältlichen Scharen ein verbessertes Durchdringungsvermögen aufweist. Des Weiteren besitzt eine derartiges Schar ein ansprechendes Design.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines Schars,
- Fig. 2: eine Draufsicht des Schars aus Fig. 1,
- Fig. 3: eine Ansicht im Wesentlichen entlang der Linie 3-3 aus Fig. 2,
- Fig. 4: eine Schnittdarstellung eines äußeren Flügelteils entlang der Linie 4-4 aus Fig. 2,
- Fig. 5: eine Schnittdarstellung eines oberen Teils des Verbindungsteils des Schars entlang der Linie 5-5 aus Fig. 3,
- Fig. 6: eine Schnittdarstellung eines unteren Teils des Verbindungsteils entlang der Linie 6-6 aus Fig. 3,

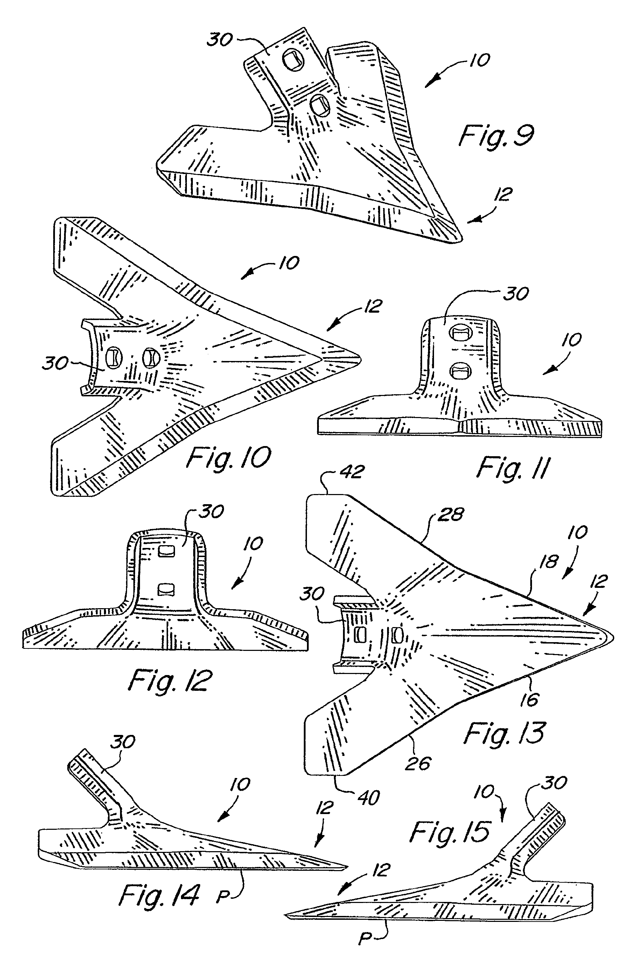

- Fig. 7: eine Schnittdarstellung entlang der Linie 7-7 aus Fig. 3,
- Fig. 8: eine Ansicht des Verbindungsteils im Wesentlichen entlang der Linie 8-8 aus Fig. 3,
- Fig. 9: eine weitere perspektivische Ansicht des Schars,
- Fig. 10: eine weitere Draufsicht des Schars,
- Fig. 11: eine Ansicht des Schars von vorne,
- Fig. 12: eine Ansicht des Schars von hinten,
- Fig. 13: eine Ansicht des Schars von unten,
- Fig. 14: eine Ansicht des Schars von der rechten Seite und
- Fig. 15: eine Ansicht des Schars von der linken Seite.

In den Figuren, welche im Wesentlichen maßstabsgetreu gezeichnet sind, wird ein Schar 10 zur Kultivierung eines Feldes dargestellt. Das Schar 10 ist für die Anbindung an einen an den Rahmen eines Arbeitsgerätes (nicht gezeigt) angebrachten Schaft angepasst zum auf herkömmliche Weise durchgeführten Vorwärtsbewegen durch den Boden. Das Schar 10 enthält einen langgestreckten vorlaufenden Nasenteil 12 mit einer vorderen Spitze 14 und geraden vorlaufenden Schneidkanten 16, 18, welche in einem Winkel von weniger als 50 Grad auseinanderlaufen. Hintere Flügel 20, 22 laufen von der Hinterseite des vorlaufenden Nasenteils 12 an der Stelle 24 auseinander und enthalten gerade Schneidkanten 26, 28, welche in einem Winkel zueinander von weniger als 75 Grad (67 Grad sind dargestellt) auseinanderlaufen. Am hinteren Endbereich des vorlaufenden Nasenteils 12 und mittig zwischen den Flügeln 20, 22 angeordnet ragt ein offenes Verbindungs- oder Schaftanbauteil 30 zur Aufnahme durch den Schaft nach oben und hinten heraus. Das Schaftanbauteil 30 kann auf beliebige herkömmliche Weise an den Schaft angebunden sein, einschließlich durch Einsetzen von Schrauben in Öffnungen des Schaftanbauteils 30 und des Schaftes oder durch Verkeilen des Schaftanbauteils 30 an einem Anschlusselement.

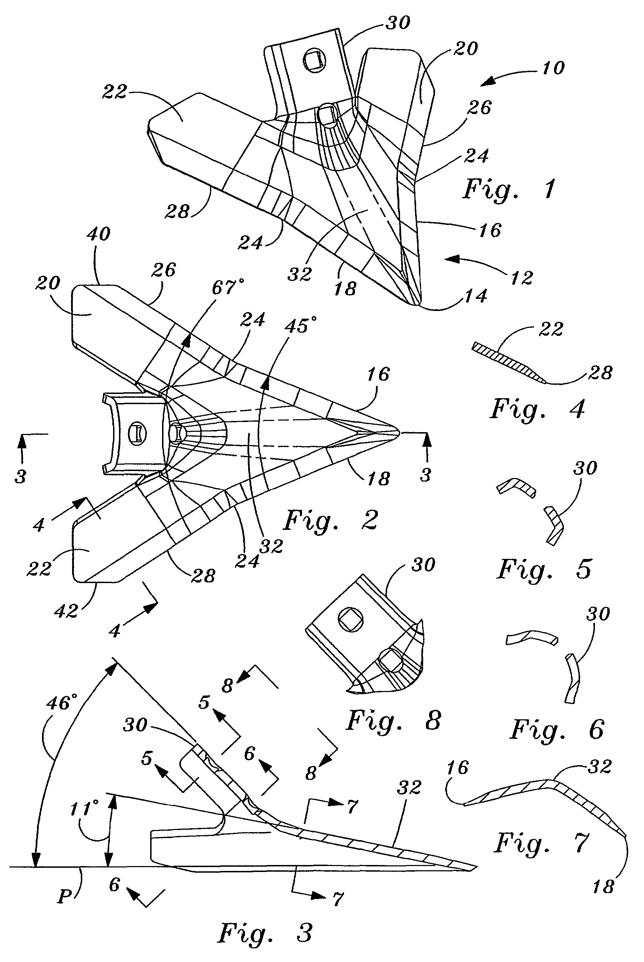

Wie in den Figuren dargestellt, ist die Länge des Schars 10 größer als die Breite und länger als bei vielen herkömmlichen Scharen, zum Teil wegen des langgestreckten vorlaufenden Nasenteils 12 mit relativ kleinem Scharwinkel. Der Scharwinkel oder der Winkel, der durch den Schnittpunkt der beiden Schneidkanten 16, 18 gebildet wird (Fig. 2), beträgt näherungsweise 45 Grad. Wie dargestellt, liegen die Schneidkanten 16, 18 und 26, 28 im Wesentlichen auf einer gemeinsamen Ebene (P aus Fig. 3). Der vorlaufende Nasenteil 12 enthält eine oberste Fläche oder einen Scheitel 32, welcher im Wesentlichen gerade ausgebildet ist und einen Winkel von weniger als 15 Grad (näherungsweise 11 Grad, wie dargestellt) zur Ebene P aus Fig. 3 formt. Der Schaftanbauteil 30 erstreckt sich ausgehend vom vorlaufenden Nasenteil 12 nach oben und nach hinten in einem Winkel von näherungsweise 46 Grad zur Ebene P aus Fig. 3.

Die Verbindungsstellen der Kanten 16, 26 und 18, 28 an den Stellen 24 definieren stumpfe Winkel, welche größer sind als 160 Grad und, im Beispiel gezeigt, näherungsweise 169 Grad betragen. Die Stellen 24 sind etwas vor dem Führungsteil des Schaftanbauteils 30 angeordnet und liegen in etwa mittig zur gesamten Länge des Schars 10. Die Länge der Kanten 16 und 18 ist wenigstens 20% größer als die Länge der Kanten 26 und 28. Zur Breitenbeibehaltung bei Abnutzung enthalten die Flügel 20, 22 Seitenkanten 40, 42, welche sich, ausgehend von den Kanten 26, 28, von vorn nach hinten erstrecken. In dem dargestellten Ausführungsbeispiel ist die Länge des Schars 10 näherungsweise 10% größer als die gesamte Breite des Schars 10.

Die Kanten 16, 26 und 18, 28 sind abgeschrägt und weisen einen selbstschärfenden Effekt bei Abnutzung auf. Die oberen Flächen des vorlaufenden Nasenteils 12 des Schars 10, welche sich, ausgehend vom Scheitel 32, in Richtung der abgeschrägten Schneidkanten 16, 18, 26, 28 erstrecken, sind im Wesentlichen planar ausgebildet, wie auch die Oberseiten der Flügel 20, 22. Bereiche, welche größtem Verschleiß ausgesetzt sind, können plattiert oder anderenfalls gehärtet oder beschichtet sein, um die Verschleißzeit zu erhöhen.

## Patentansprüche

1. Bodenbearbeitungsschar, angepasst für die Anbindung an einen Schaft zum Vorwärtsbewegen durch einen Boden, mit einem langgestreckten vorlaufenden Nasenteil (12), welcher eine vorlaufende Spitze (14) und vordere Schneidkanten (16, 18) aufweist, wobei die Schneidkanten (16, 18) gerade ausgebildet sind und ausgehend von der vorlaufenden Spitze (14) in einem Winkel von weniger als 50 Grad auseinanderlaufen, und mit äußeren Flügelbereichen (20, 22), welche sich vom vorlaufenden Nasenteil (12) aus erstrecken und gerade ausgebildete, mit den vorderen Schneidkanten (16, 18) Verbindungsstellen (24) formende, vorlaufende Flügelschneidkanten (26, 28) aufweisen, **dadurch gekennzeichnet, dass** die vorlaufenden Flügelschneidkanten (26, 28) relativ zueinander in einem Winkel von weniger als 75 Grad auseinanderlaufen.

2. Bodenbearbeitungsschar nach Anspruch 1, **dadurch gekennzeichnet, dass** der vorlaufende Nasenteil (12) eine oberste Fläche (32) aufweist, welche, von der Seite des Schars aus betrachtet, gerade ausgebildet ist und aufwärts angewinkelt von einer Ebene (P) zu einer Verbindungsstelle mit einem Schaftanbauteil (30) in einem Winkel von näherungsweise 11 Grad verläuft.

3. Bodenbearbeitungsschar nach Anspruch 1 oder 2, **dadurch gekennzeichnet, dass** die vorderen Schneidkanten (16, 18) und die vorlaufenden Flügelschneidkanten (26, 28) einen stumpfen Winkel von mehr als 160 Grad einschließen.

4. Bodenbearbeitungsschar nach einem der vorhergehenden Ansprüche, **dadurch gekennzeichnet, dass** das Bodenbearbeitungsschar (10) eine Breite und eine Gesamtlänge, die größer als die Breite ist, aufweist.

5. Bodenbearbeitungsschar nach einem der vorhergehenden Ansprüche, **dadurch gekennzeichnet, dass** die vorderen Schneidkanten (16, 18) in einem Winkel von näherungsweise 45 Grad auseinanderlaufen.

6. Bodenbearbeitungsschar nach einem der vorhergehenden Ansprüche, **dadurch gekennzeichnet, dass** die vorlaufenden Flügelschneidkanten (26, 28) in einem Winkel von näherungsweise 67 Grad auseinanderlaufen.

7. Bodenbearbeitungsschar nach einem der vorhergehenden Ansprüche, **dadurch gekennzeichnet, dass** die vorderen Schneidkanten (16, 18) eine größere Länge als die vorlaufenden Flügelschneidkanten (26, 28) aufweisen.

8. Bodenbearbeitungsschar nach Anspruch 2 bis 7, **dadurch gekennzeichnet, dass** der Schaftanbauteil (30) sich ausgehend vom vorlaufenden Nasenteil (12) nach oben erstreckt und einen vordersten Bereich aufweist, welcher an einem hinteren Ende des vorlaufenden Nasenteils (12) und in Bezug auf das Bodenbearbeitungsschar (10) zentriert angeordnet ist.

9. Bodenbearbeitungsschar nach Anspruch 2 bis 8, **dadurch gekennzeichnet, dass** ein Bodenbereich enthalten ist, welcher im Wesentlichen in der Ebene (P) liegt, wobei der Schaftanbauteil (30) mit der Ebene(P) einen Winkel von näherungsweise 46 Grad bildet.

10. Bodenbearbeitungsschar nach Anspruch 8 oder 9, **dadurch gekennzeichnet, dass** die Verbindungsstellen (24) auf den gegenüberliegenden Seiten des vordersten Bereichs des Schaftanbauteils (30) angeordnet sind.

11. Bodenbearbeitungsschar nach einem der vorhergehenden Ansprüche, **dadurch gekennzeichnet, dass** die vorlaufenden Flügelschneidkanten (26, 28) in einem Winkel von näherungsweise 67 Grad auseinanderlaufen und an den Verbindungsstellen (24) mit den vorderen Schneidkanten (16, 18) einen Winkel von näherungsweise 11 Grad bilden.
